# EUROPÄISCHE PATENTSCHRIFT

(11) **EP 2 748 267 B1**
(45) Veröffentlichungstag und Bekanntmachung des Hinweises auf die Patenterteilung: **06.05.2020**
(21) Anmeldenummer: 12766578.4
(22) Anmeldetag: 27.08.2012
(51) Int. Cl.: C09D 105/00, C09D 105/04, C09D 105/12, C09D 5/00

(54) **VERFAHREN ZUM SCHÜTZEN VON OBERFLÄCHEN**
METHOD FOR PROTECTING SURFACES
PROCÉDÉ POUR PROTÉGER DES SURFACES

(30) Priorität: 25.08.2011 DE 102011111179; 31.01.2012 DE 102012001729; 17.08.2012 DE 102012016275
(43) Veröffentlichungstag der Anmeldung: 02.07.2014
(73) Patentinhaber: Schmitt Prof. Möhlmann & Collegen Wirtschaftskanzlei -Insolvenzverwalter Aktiengesellschaft, 08056 Zwickau (DE)
(72) Erfinder: REICHWAGEN, Claudia, 59227 Ahlen (DE)
(74) Vertreter: Thiel, Christian
(86) Internationale Anmeldenummer: PCT/EP2012/003594
(87) Internationale Veröffentlichungsnummer: WO 2013/026581

(56) Entgegenhaltungen:
- EP-A2- 1 297 827
- DE-A1- 1 492 695
- DE-A1- 1 669 159
- DE-A1- 1 913 588
- KR-A- 20040 100 188
- US-A- 4 347 266
- US-A1- 2009 053 497
- LAZARUS C R ET AL: "EVALUATION OF A CALCIUM ALGINATE COATING AND A PROTECTIVE PLASTIC WRAPPING FOR THE CONTROL OF LAMB CARCASS SHRINKAGE", JOURNAL OF FOOD SCIENCE, Bd. 41, Nr. 3, 1976, Seiten 639-641, XP002689583, ISSN: 0022-1147

## Beschreibung

Die Erfindung betrifft ein Verfahren zum Schützen empfindlicher Oberflächen vor Beschädigung durch Aufbringen einer Schutzschicht.

In der Industrie ist es üblich, empfindliche technische Oberflächen mit Folien zu beschichten, um sie vor Korrosion und Beschädigung zu schützen. Bei den Folien handelt es sich weithin um Kunststofffolien, die bei Auslieferung des Produkts bzw. bei Verkauf abgezogen und entsorgt werden. Bei den zu schützenden Oberflächen handelt es sich in der Regel um lackierte Oberflächen, beispielsweise von Kraftfahrzeugen.

Nachteilig bei der Folienbeschichtung ist zum einen der Aufwand und zum anderen die Entsorgung des Kunststoffs. Das Abziehen der Kunststofffolie ist lästig und dann, wenn es vor der Auslieferung an den Kunden erfolgt, zeitaufwendig und kostenträchtig. Die Folien sind in der Regel nicht biologisch abbaubar, sondern müssen recycelt oder anderweitig entsorgt werden.

Gerade bei Kraftfahrzeugen bieten Schutzfilme der vorstehend beschriebenen Art nur einen begrenzten Schutz; bei Kontakt mit harten Gegenständen wird der Schutzfilm häufig durchstoßen und der darunterliegende Lack beschädigt.

Es besteht deshalb ein Bedarf an Schutzüberzügen, die die vorstehend genannten Nachteile nicht aufweisen und insbesondere einfach entfernt und entsorgt werden können.

Die DE 1 492 695 A1 wie auch C. R. Lazarus et al; J. of Food Science 41, 639-641 (1976) beschreiben die Verwendung von Alginat zum Schutz von Oberflächen von Lebensmitteln. Die KR 2004 0 100 188 A beschreibt die Beschichtung von Tofu mit Agarose, die EP 1 297 827 die Beschichtung von Tabletten mit Carrageen. Aus der US 2009/053497 A1 geht die Verwendung von Alginatlösung zur Beschichtung von Kunstrasen hervor.

Aufgabe der Erfindung ist daher, kratzempfindliche Oberflächen mit einem Schutzfilm zu überziehen, der biologisch leicht abbaubar ist, nicht klebt, auch höheren Temperaturen standhält und mit Wasser wieder entfernbar ist.

Diese Aufgabe wird mit Verfahren gemäß den Ansprüchen 1 und 3 gelöst.

Alternativ wird die zu schützende Oberfläche mit einer erhitzten wässerigen Lösung von Agarose, Carrageen und/oder Gellan in Kontakt gebracht, wo sie durch Abkühlen geliert. Zum Abkühlen reicht es in der Regel aus, die Agaroselösung auf eine kalte Oberfläche aufzubringen. Insbesondere bei Carrageen und Gellan fördern Alkali- und Erdalkaliionen die Gelierung.

Die erfindungsgemäßen Verfahren können auf alle Oberflächen angewandt werden, die gegen Beschädigung, insbesondere Zerkratzen, geschützt werden sollen. Die Oberflächen sollten aber gegen Feuchtigkeit beständig sein.

Bei allen vorgenannten Beschichtungsmitteln handelt es sich um natürliche Polysaccharide. Diese können in bekannter Weise modifiziert sein.

Alginsäure ist ein hochmolekulares Naturprodukt aus α-L-Guluronsäure und β-D-Mannuronsäure, das eine mittlere Molmasse im Bereich von etwa 40.000 bis etwa 200.000 aufweisen kann. Während die freie Säure, ein weißer Feststoff in Wasser im Wesentlichen unlöslich ist, sind die Alkalisalze und insbesondere das Natriumsalz in Wasser löslich. Es lassen sich ohne weiteres bis zu 3 %ige Lösungen herstellen, die allerdings mit zunehmender Alginatkonzentration sehr viskos werden können.

Alginsäure wird von Braunalgen und einigen Bakterienarten gebildet und steht in großen Mengen zu niedrigen Preisen zur Verfügung. Eine besondere Eigenschaft der Alginate ist die Einlagerung von mehrwertigen Metallionen, etwa Ca²⁺-Ionen, die unter Ausbildung einer räumlichen Struktur abläuft und zur Gelierung und Ausfällung des Alginats aus der wässerigen Lösung führt. Die Reaktion ist ausgesprochen schnell und reversibel; durch Herauslösen der Calciumionen aus der Alginatmatrix wird das Alginat erneut wasserlöslich und kann "abgewaschen" werden. Als Sequestrierungsmittel zum Herauslösen der Calciumionen kann beispielsweise EDTA verwandt werden, aber auch Zitrat.

Die Gelbildung kann auch durch andere Metallionen induziert werden, beispielsweise weitere Erdalkalimetallionen, Zinkionen, Aluminiumionen sowie Eisen-II- und Eisen-III-Ionen.

Alginate kommen bislang in der Lebensmitteltechnologie, in der Medizintechnik (Kapseln), in der Textilindustrie, bei der Herstellung fotografischer Papiere und bei der Abformung zum Einsatz. Alginatschutzfilme sind bislang noch nicht bekannt geworden.

Agarose ist ein hochmolekulares Naturprodukt, ein Polysaccharid aus D-Galactose und 3,6-Anhydro-L-galactose, die glykosidisch miteinander verbunden sind, das eine mittlere Molmasse im Bereich von etwa 110.000 bis 160.000 D aufweisen kann. Agarose ist in heißem Wasser leicht löslich. Es lassen sich ohne weiteres bis zu 3 %ige Lösungen herstellen, die allerdings mit zunehmender Agarosekonzentration sehr viskos werden können.

Agarose wird von Rotalgengattungen Gelidium und Gracillaria gewonnen und steht in großen Mengen zu niedrigen Preisen zur Verfügung. Eine besondere Eigenschaft der Agarose ist, dass ihre Lösungen auch bei erhöhten Temperaturen gelförmig fest sind. Agaroselösungen sind bei 95 °C flüssig und erstarren bei 45°C. Handelsübliches Agar enthält als Hauptbestandteil Agarose.

Carrageen ist ein Polysaccharid mit einem Molekulargewicht von bis zu 1.000.000 D, das aus Galactose- und 3,6-Anhydrogalactoseeinheiten zusammengesetzt ist, die teilweise Sulfatgruppen tragen. Carrageen wird aus Rotalgen gewonnen und kommt in mehreren Varianten vor. Kappa- und Jota-Carrageen bilden mit Kalium-, Natrium- und Calciumionen feste Gele.

Gellan ist ein Polysaccharid mit einem Molekulargewicht von etwa 500.000 D, das aus Phamnose-, Glucuronsäure und Glucoseeinheiten besteht. Es wird durch Fermentation von Kohlenhydraten mit Pseudomonas elodea hergestellt. Gellan ist bei erhöhter Temperatur wasserlöslich und bildet bereits bei einer Konzentration von 0,1 % in Wasser stabile Gele.

Agarose kommt bislang in der Lebensmitteltechnologie, in der Molekularbiologie für Gelelektrophorese, in der Mikrobiologie für Nährmedien, und bei der Pflanzenaufzucht zum Einsatz. Agaroseschutzfilme sind bislang noch nicht bekannt geworden. Gellan wird als Geliermittel in der Lebensmittelindustrie eingesetzt, Carrageen als Gelier- und Verdickungsmittel.

Für die erfindungsgemäß zum Einsatz kommende wässerige Alginatlösung kommt insbesondere eine Natriumalginatlösung in Wasser in Frage, die 0,3 bis 3 % Alginat enthalten kann, insbesondere etwa 1 %.

In diesem Zusammenhang sei festgestellt, dass alle in der Anmeldung genannten Prozentangaben Gewichtsprozente sind.

Das geeignete Metallion für die Gelierung von Alginat ist das Ca²⁺-Ion.

Für die erfindungsgemäß zum Einsatz kommenden Lösungen kommen ferner Lösungen in Wasser in Frage, die 0,1 bis 3 % Agarose, Carrageen und/oder Gellan enthalten, insbesondere etwa 1 %. Diese Lösungen können auch mit Alginatlösungen kombiniert werden.

Das sich ausbildende Gel trocknet unter Wasserverlust und Ausbildung der Schutzschicht zu einem undurchsichtigen trockenen Film oder ggf. Schaum.

Gemäß einer besonderen Ausführungsform führt das Verfahren zur Ausbildung eines Schaums auf der zu schützenden Oberfläche. Dies kann zum einen dadurch erfolgen, dass die jeweilige Lösung mechanisch aufgeschäumt wird, was dank der relativ hohen Viskosität ohne weiteres möglich ist. Schaumstabilisatoren können dabei helfen, etwa Natriumdodecylsulfat oder Ammoniumstearat. Der Schaum kann dann, ggf. mit Hilfe der Metallionen, zu einer Schutzschicht stabilisiert werden, die zahlreiche Poren aufweist.

Erfindungsgemäß ist in einen Alginatschaum oder die wässerige Alginatlösung Calciumcarbonat als feines Pulver eindispergiert. Nach Aufbringen der so mit Calciumcarbonat dotierten Lösung können daraus Calciumionen durch Besprühen mit einer schwachen Säure freigesetzt werden. Auch dies führt zur Gelbildung und gleichzeitig zur Aufschäumung über freigesetztes CO₂. Als schwache Säure kommt beispielsweise Gluconsäure in Frage. Andere schwache organische Säuren können ebenfalls verwandt werden, soweit sie die Oberfläche nicht angreifen. Entsprechendes gilt für Carrageen, Agarose- und Gellanlösung bzw. -schaum.

Zur Gelierung werden bei Kappa-Carrageen vorzugsweise Kalium- und Calciumsalze eingesetzt, bei Jota-Carrageen Calciumsalze.

Es kann zweckmäßig sein, die zu beschichtende Oberfläche mit einem Anti-Haftmittel auszustatten und die Schutzschicht auf diese Zwischenschicht aufzubringen. Als Anti-Haftschichten kommen Teflon, Silikon und andere übliche Materialien in Frage.

Die wässerige Polysaccharidlösung, wie vorstehend definiert, kann biozid ausgestattet sein, um einem Befall mit Bakterien oder Pilzen vorzubeugen. Es handelt sich dabei um übliche Biozide.

Im Allgemeinen ist die nach dem erfindungsgemäßen Verfahren ausgebildete Schutzschicht 0,1 bis 5 mm dick, insbesondere 0,5 bis 2 mm. Dabei haben die größeren Schichtdicken vorzugsweise eine Schaumstruktur. Für den Fall, dass keine Schaumbildung erfolgt, kann die erforderliche Schichtdicke durch mehrfaches Auftragen der Schutzschichtbildner erfolgen.

Die erfindungsgemäß aufgebrachte Schutzschicht kann mit Hilfe eines Hochdruckreinigers abgewaschen werden, ggf. nach Zugabe eines Sequestrierungsmittels, wie oben erwähnt und/oder bei erhöhter Temperatur.

Das erfindungsgemäße Verfahren eignet sich insbesondere zum Schutz von lackierten Oberflächen technischer Produkte, wie fabrikneuen Kraftfahrzeugen.

Ein weiteres Einsatzfeld ist die Beschichtung von Oberflächen, bei dem auf den Schutzfilm weitere Materialien aufgebracht werden. Hier fungiert der Polysaccharidfilm als Trennschicht. Auf diese Weise können beispielsweise Gussbeton und Verschalung voneinander getrennt werden. Entsprechendes gilt für andere Gießverfahren.

Die Erfindung betrifft ferner die Verwendung von ggf. Metallionen enthaltenen Polysaccharidgelen zum Schutz technischer Oberflächen, insbesondere von Lackschichten, besonders bevorzugt von Kraftfahrzeugen.

Die Ausgangsstoffe für das erfindungsgemäße Verfahren können als wasserlösliche Pulver vorgehalten werden. Das Natriumalginat selbst ist wasserlöslich und trocknet zu einer sehr dünnen Schicht. Die Wasserlöslichkeit wird durch Zugabe von Metallionen erheblich eingeschränkt, so dass die Schutzschicht nicht mehr ohne weiteres abgewaschen und entfernt werden kann.

Carrageen, Agarose und Gellan, können als wasserlösliche Pulver vorgehalten werden. Agarose und Gellan sind in der Hitze wasserlöslich und trocknen zu einer sehr dünnen Schicht. Die Wasserlöslichkeit ist bei Raumtemperatur erheblich eingeschränkt, so dass die Schutzschicht nicht mehr ohne weiteres abgewaschen und entfernt werden kann.

Die zum Einsatz kommende Lösung kann auf verschiedene Viskositäten eingestellt werden, was für die Einstellung der Schichtdicke auf dem zu schützenden Objekt von Bedeutung ist. Der Schutzfilm selbst ist stabil, nicht klebrig und hinterlässt keine Spuren bei Berührung oder nach seiner Entfernung.

Er ist mit Hilfe wässeriger Reinigungsmittel und ggf. eines Sequestrierungsmittels leicht zu entfernen. Er kann auf allen lackierten, polierten und sonst wie behandelten Oberflächen, die nicht wasserempfindlich sind, angewandt werden.

Wie üblich, können den Ausgangsstoffen Korrosionsinhibitoren, UV-Schutzmittel, Füllstoffe und dergleichen zugemischt werden.

Geeignete Füllmittel sind beispielsweise Aerosil® (pyrogenes Kieselgel), TiO₂, Nussschalen- und Kokosschalenmehl. Die Menge liegt im Bereich von 0,1 bis 0,5 Gew.-%. Durch die Füllstoffe wird der Film insgesamt reißfester.

Zur Erhöhung der Geschmeidigkeit des Films kann eine Menge von bis zu 2 Gew.-%, insbesondere etwa 1 Gew.-%, Glycerin zugegeben werden.

## Patentansprüche

1. Verfahren zum Schützen von lackierten Oberflächen technischer Produkte vor Beschädigung durch Aufbringen einer Schutzschicht, **dadurch gekennzeichnet, dass** die Oberfläche mit einer wässerigen Alginatlösung und Ca²⁺-Ionen, die das Alginat zum Gelieren bringen, in Kontakt gebracht wird, wobei die wässrige Alginatlösung Calciumcarbonat in fein verteilter Form enthält und die Ca²⁺-Ionen aus dem Calciumcarbonat durch Besprühen mit einer schwachen Säure freigesetzt werden.

2. Verfahren nach Anspruch 1, **dadurch gekennzeichnet, dass** eine Natriumalginatlösung in Wasser mit 0,3 bis 3 Gew.-%, insbesondere etwa 1 Gew.-%, Alginat verwandt wird.

3. Verfahren zum Schützen von lackierten Oberflächen vor Beschädigung durch Aufbringen einer Schutzschicht, **dadurch gekennzeichnet, dass** die Oberfläche mit einer heißen wässrigen Agarose-; Carrageen- und/oder Gellanlösung in Kontakt gebracht wird, welche durch Abkühlen geliert.

4. Verfahren nach Anspruch 3, **dadurch gekennzeichnet, dass** eine wässerige Lösung mit 0,1 bis 0,3 Gew.-%, insbesondere 1 bis 3 Gew.-% Agarose, Carrageen und/oder Gellan verwandt wird.

5. Verfahren nach Anspruch 3 oder 4, **dadurch gekennzeichnet, dass** die zu schützende Oberfläche mit der warmen flüssigen Agarose-, Carrageen- und/oder Gellanlösung besprüht wird.

6. Verfahren nach Anspruch 1 oder 3, **dadurch gekennzeichnet, dass** die wässerige Lösung als Schaum aufgebracht wird.

7. Verfahren nach Anspruch 1, **dadurch gekennzeichnet, dass** als schwache Säure wässerige Gluconsäure verwandt wird.

8. Verfahren nach einem der vorstehenden Ansprüche, **dadurch gekennzeichnet, dass** die wässerige Lösung ein Biozid zur Verhinderung von mikrobiologischem Befall aufweist.

9. Verfahren nach einem der vorstehenden Ansprüche, **dadurch gekennzeichnet, dass** die zu schützende Oberfläche mit einem Anti-Haftmittel grundiert wird.

10. Verfahren nach einem der vorstehenden Ansprüche, **dadurch gekennzeichnet, dass** die Schutzschicht eine Dicke von 0,1 bis 0,5 mm, insbesondere von 0,5 bis 2 mm aufweist.

11. Verfahren nach einem der Ansprüche 1 oder 3, **dadurch gekennzeichnet, dass** die zu schützende Oberfläche die Karosserie eines Kraftfahrzeugs ist.

12. Verwendung einer Schutzschicht, erhalten nach einem der Ansprüche 1 oder 3, zum Schutz der Karosserie eines Kraftfahrzeugs.

## Claims

1. A process for the protection of coated surfaces of technical products against damage by application of a protective layer,
**characterized in that** the surface is brought into contact with an aqueous alginate solution and Ca²⁺ ions, which cause the alginate to gelatinize, the aqueous solution containing calcium carbonate in finely dispersed form and the Ca²⁺ ions being released from calcium carbonate by spraying with a weak acid.

2. The process according to claim 1, **characterized in that** a sodium alginate solution in water is used with 0.3 to 3 % w/w, in particular approx. 1 % w/w of alginate.

3. A process for the protection of coated surfaces against damage by application of a protective layer, **characterized in that** the surface is brought into contact with a hot aqueous agarose, carrageenan and/or gellan solution which gelatinizes when cooling down.

4. The process according to claim 3, **characterized in that** an aqueous solution with 0.1 to 3 % w/w, in particular 1 to 3 % w/w of agarose, carrageenan and/or gellan is used.

5. The process according to claim 3 or 4, **characterized in that** the surface to be protected is sprayed with the hot liquid agarose, carrageenan and/or gellan solution.

6. The process according to claim 1 or 3, **characterized in that** the aqueous solution is applied in the form of foam.

7. The process according to claim 1, **characterized in that** aqueous gluconic acid is used as weak acid.

8. The process according to any one of the above claims, **characterized in that** the aqueous solution contains a biocide for the prevention of microbiological contamination.

9. The process according to any one of the above claims, **characterized in that** the surface to be protected is primed with an anti-adhesive agent.

10. The process according to any one of the above claims, **characterized in that** the thickness of the protective layer ranges between 0.1 and 5 mm, in particular between 0.5 and 2 mm.

11. The process according to claim 1 or 3, **characterized in that** the surface to be protected is the body of an automobile.

12. Use of a protective layer obtained in accordance with one of claims 1 or 3, for the protection of the body of an automobile.

## Revendications

1. Procédé pour protéger, par application d'une couche protectrice, des surfaces peintes de produits techniques contre les détériorations, **caractérisé en ce que** la surface est amenée en contact avec une solution aqueuse d'alginate et des ions Ca²⁺, qui amènent l'alginate à gélifier, la solution aqueuse d'alginate contenant du carbonate de calcium sous forme finement dispersée et les ions Ca²⁺ étant libérés du carbonate de calcium par aspersion avec un acide faible.

2. Procédé selon la revendication 1, **caractérisé en ce qu'**une solution d'alginate de sodium dans de l'eau avec 0,3 à 3 % en poids, en particulier environ 1 % en poids, d'alginate est utilisée.

3. Procédé pour protéger, par application d'une couche protectrice, des surfaces peintes contre les détériorations, **caractérisé en ce que** la surface est amenée en contact avec une solution aqueuse chaude d'agarose, de carraghénane et/ou de gomme gellane, qui gélifie en se refroidissant.

4. Procédé selon la revendication 3, **caractérisé en ce qu'**une solution aqueuse avec 0,1 à 0,3 % en poids, en particulier 1 à 3 % en poids, d'agarose, de carraghénane et/ou de gomme gellane est utilisée.

5. Procédé selon la revendication 3 ou 4, **caractérisé en ce que** la surface à protéger est aspergée avec la solution liquide chaude d'agarose, de carraghénane et/ou de gomme gellane.

6. Procédé selon la revendication 1 ou 3, **caractérisé en ce que** la solution aqueuse est appliquée sous forme de mousse.

7. Procédé selon la revendication 1, **caractérisé en ce que** de l'acide gluconique aqueux est utilisé comme acide faible.

8. Procédé selon l'une des revendications précédentes, **caractérisé en ce que** la solution aqueuse comporte un biocide pour empêcher une infection microbiologique.

9. Procédé selon l'une des revendications précédentes, **caractérisé en ce que** l'on applique une sous-couche d'agent antiadhésif sur la surface à protéger.

10. Procédé selon l'une des revendications précédentes, **caractérisé en ce que** la couche protectrice présente une épaisseur de 0,1 à 0,5 mm, en particulier de 0,5 à 2 mm.

11. Procédé selon la revendication 1 ou 3, **caractérisé en ce que** la surface à protéger est la carrosserie d'un véhicule automobile.

12. Utilisation d'une couche protectrice, obtenue selon la revendication 1 ou 3, pour protéger la carrosserie d'un véhicule automobile.
